# EUROPEAN PATENT APPLICATION

(11) **EP 1 128 298 A1**
(43) Date of publication of application: **29.08.2001**
(21) Application number: 00301357.0
(22) Date of filing: 21.02.2000
(51) Int. Cl.: G06F 17/60

(54) **Carriage inquiry and booking system**

(71) Applicant: CMC Magnetics Corporation, Taipei (TW)
(72) Inventor: Lin, Danny, Taipei, 100 (TW); Chen, Kevin, Shijr City, 221, Taipei County (TW)
(74) Representative: Gibbs, Christopher Stephen

(57) **Abstract**

In a method for processing a carriage requirement of a customer, especially the inquiry and booking processes for carriage, customers can inquire and book the carrier schedules via a server that provides the information of carrier schedules. In addition, shipping agents or forwarders can return carrier rates and related booking data to the customer via the server. These inquiry and booking records or transaction records are stored in the server.

## Description

### Field of the Invention:

The present invention is related to an information processing system and method, more specifically, to a method and system for processing carrier requirements of a customer and providing a communication channel between the customer and the carrier agents for inquiring and booking the carrier by the Internet.

### Description of the Prior Art:

In the following description, these terms "carrier agents, shipping agents or forwarders" refer to the carrier or ship owners who owns carriers or ships to convey goods, or the carrier or ship agent companies which can provide transportation to convey goods. In addition, the term "customers" refers to the persons or firms who have a carriage requirement from a departure location to a destination location at a specified time period. In addition, the term "carriers" refers to various vehicles for conveying goods, including ships, airlines or others. The following description concentrates on the shipping application. However, it is understood by those skilled in the art that the applications of other carriers also can use the same method to achieve the same result.

In the conventional case, customers usually requires ordering shipping or flight schedule newspapers to acquire the information of the ship or flight lines provided by various carrier agents and their schedules. If the customers find out several ship lines containing trips that can satisfy their needs, they should take several hours to call different shipping agents or forwarders for inquiring the prices, comparing the prices and booking carrier schedules. It is obvious that the inquiry/booking process is time-consuming and inefficient.

### SUMMARY OF THE INVENTION

Therefore, the object of the present invention is to provide a method and system of processing carriage requirements of a customer and providing a communication channel between the customer and the carrier agents for inquiring and booking the carrier schedules.

The present invention achieves the above-indicated objects by providing a method for processing a carriage requirement of a customer, especially the inquiry and booking processes for carriage. At first, various carrier schedules provided by a plurality of carrier agents are displayed on a computer of the customer, where each of the carrier schedules containing a departure location, a destination location and a schedule data and being provided by one of the carrier agents. Then the customer selects at least one of the carrier schedules to meet his carriage requirement and sends an inquiry form containing the selection result for inquiring the carrier rate from the computer of the customer to a server via a network, for example, by e-mail. When receiving the inquiry form, the server informs the carrier agent who provides the carrier schedule selected by the customer of the inquiry of the carriage rate, for example, by e-mail. This electronic-mail can contain a link directed to a first web page on the server, which includes the information of the carrier schedule that the customer inquires, or directly includes the information of the carrier schedule that the customer inquires. Then the inquiry form provided by the server is displayed on the computer of the carrier agent.

According to the shown inquiry form, the carrier agent can determine a carriage rate of the selected carrier schedule and sends the carriage rate from the computer of the carrier agent to the server via the network. Then the server informs the customer of the reception of the carriage rate, for example, by e-mail. This electronic mail can contain a link directed to a second web page on the server, which includes the information of the carriage rate that the carrier agent determines, or directly include the information of the carrier rate that the carrier agent determines. Then the determined carriage rate provided by the server is displayed on the computer of the customer.

The above is the inquiry process. If the customer accepts the carrier rate and is ready to book it, he fills in a booking form for ordering the selected carrier schedule provided by the carrier agent and sends it to the server. Then the server informs the carrier agent providing the selected carrier schedule of the booking of the selected carrier schedule, for example, by e-mail. The electronic mail can contain a link directed to a third web page on the server, which includes the information of the booking of the selected carrier schedule, or directly include the information of the booking of the selected carrier schedule. Then the booking form provided by the server is displayed on the computer of the carrier agent.

After receiving the booking message, the carrier agent assigns a serial number to the current booking form and calculates a total fee of the carrier schedule ordered by the customer, and sends it to the server. Then the server informs the customer of the reception of the serial number and the total fee, for example, by e-mail. This electronic mail can contain a link directed to a fourth web page on the server, which includes the information of the serial number and the total fee that the carrier agent provides, or directly include the information of the serial number and the total fee that the carrier agent provides. Then the serial number and the total fee are displayed on the computer of the customer. The above is the booking process.

In the above procedures, the customer can select at least two of the carrier schedules provided by two or more carrier agents to combine a shipping journey meeting the carriage requirement, or selects at least two of the carrier schedules provided by two or more carrier agents with the same departure location and the destination location. In this case, the server individually informs the carrier agents of the inquiry of the carrier schedules and receives the carriage rates of the selected carrier schedules from the carrier agents. In addition, the related transaction data, such as the inquiry form and the booking form pertaining to the customer and the carriage rate, the serial number and the total fee pertaining to the carrier agent in a database of the server.

In addition, the present invention further provides a system for processing a carriage requirement of a customer. It includes a device for transferring a plurality of carrier schedules provided by a plurality of carrier agents to a computer of the customer, a device for receiving an inquiry form containing at least one of the carrier schedules selected by the customer from the computer of the customer and a carriage rate of the selected carrier schedule determined by the carrier agent serving the selected carrier schedule from a computer of the carrier agent; and a device for informing the carrier agent providing the selected carrier schedule of the inquiry of the carrier schedule and informing the customer of the reception of the carriage rate, wherein each of the carrier schedules containing a departure location, a destination location and a schedule data and being served by one of the carrier agents. These operations are performed in the inquiry phase. In the booking phase, the receiving device receives a booking form from the computer of the customer for ordering the selected carrier schedule, and a serial number and a total fee from the computer of the carrier agent. The informing device informs the carrier agent providing the selected carrier schedule of the booking of the carrier schedule and informs the customer of the reception of the serial number and the total fee.

In this claimed system, the informing device can be an electronic mail agent program. The e-mail agent program can mail to the customer and the carrier agent for transmitting messages between them. The transmitted e-mails can directly include these messages or contain links directed to web pages containing these messages. Therefore, the system further comprises a device for generating the web pages containing these messages and a device for processing the access of the web pages.

### BRIEF DESCRIPTION OF THE DRAWINGS

The following detailed description, given by way of example and not intended to limit the invention solely to the embodiments described herein, will best be understood in conjunction with the accompanying drawings, in which:
FIG. 1 is a block diagram of the inquiry and booking system in accordance with the preferred embodiment of the present invention;
FIG. 2 is a block diagram of the customer computer in accordance with the preferred embodiment of the present invention, including hardware and software;
FIG. 3 is a block diagram of the shipping agent computer in accordance with the preferred embodiment of the present invention, including hardware and software;
FIG. 4 is a block diagram of the web server responsible for the inquiry and the booking processes in accordance with the preferred embodiment of the present invention, including hardware and software;
FIG. 5 is a flowchart of the login process in accordance with the preferred embodiment of the present invention, including hardware and software;
FIG. 6 is a flowchart of the customer inquiry procedure in accordance with the preferred embodiment of the present invention;
FIG. 7 is a flowchart of the shipping agent inquiry procedure in accordance with the preferred embodiment of the present invention;
FIG. 8 is a flowchart of the customer booking procedure in accordance with the preferred embodiment of the present invention; and
FIG. 9 is a flowchart of the shipping booking procedure in accordance with the preferred embodiment of the present invention.

### DETAILED DESCRIPTION OF THE INVENTION

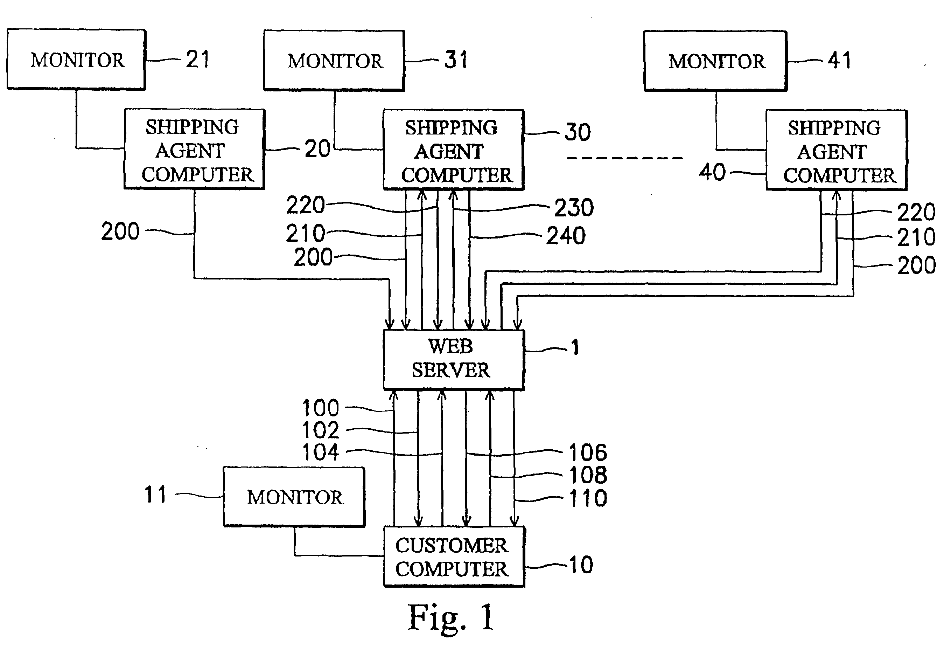

FIG. 1 is a block diagram of the inquiry and booking system in the preferred embodiment. As shown in FIG. 1, the inquiry and booking system includes a web server 1, a customer computer 10 and several shipping agent computers (20, 30, 40). These terminals are linked via a network, such as the Internet, a local area network, a wide area network or other types of networks. Customer computer 10 includes a monitor 11 for displaying information. In addition, shipping agent computers (20, 30, and 40) also include their dedicated monitors (21, 31, and 41) for displaying information. In FIG. 1, only one customer using the customer computer 10 is illustrated for simplification. However, it is understood by those skilled in the art that the system can concurrently serve a plurality of customers using their own computers to perform the inquiry and booking procedures described later.

At first, the shipping agents using the shipping agent computers (20, 30, and 40) must provide shipping-line data 200 to web server 1. After collecting these shipping-line data 200, the web server 1 arranges them in a form or database that can be easily viewed and searched by customers. For example, the shipping-line data 200 can be converted into a hypertext markup language (HTML) format which can be viewed by using various world-wide-web (WWW) browsers, such as Microsoft Explorer or Netscape Navigator. However, it is noted that this expression manner does- not limit the scope of the present invention. In addition, the shipping agents using the shipping agent computers (20, 30, 40) can provide updated shipping-line data 200 to the web server 1 if they change the details of the existing shipping lines, delete one or more of the existing shipping line or add a new shipping line.

### Inquiry Procedure

When the customer using the customer computer 10 visits the web server 1, the customer computer 10 sends an authentication data 100, which may contain a user name or e-mail address and a password, to the web server 1 for the login process, which will be described later. If the customer successfully logins the web server 1, the customer computer 10 can access a web page containing various shipping-schedule data 102 contained in the shipping-line data 200 and the shipping-schedule data 102 can be downloaded to the customer computer 10 and displayed on the monitor 11, for example, via a WWW browser in this embodiment. In this embodiment, each item of the shipping-schedule data represents a trip from a departure location or port to a destination location or port at a specified period. According to the departure location, the destination location and the schedule data, the customer can ferret out one or more items of the shipping-line data 102 that can satisfy his shipping needs. For example, the customer can find out one trip that can satisfy his carriage requirements, or a lot of trips provided by more than one shipping agents or forwarders that can satisfy his carriage requirements, or several trips that are combined into a shipping journey that can satisfy his carriage requirements. Apparently, if the search result involves more than one shipping agent or forwarder, the inquiry or booking procedure described later can be concurrently performed for all shipping agents or forwarders. In the following description, two shipping agents (corresponding to the computers 30 and 40) providing similar trips that satisfy the customer's carriage requirements are selected as candidates and inquired for shipping rates, but only one shipping agent (corresponding to the computer 30) wins the shipping order.

As described above, the customer fills in an inquiry form 104 for inquiring shipping rates of the selected shipping schedules provided by the shipping agents or forwarders using the computers 30 and 40 and sends the inquiry form 104 to the web server 1. The inquiry form 104 can be transmitted by electronic mail. When receiving the inquiry form 104, the web server 1 can search the inquiry form 104 for the shipping schedules that the customer inquires and find out the corresponding shipping agents or forwarders. Then the web server 1 sends inquiry e-mails 210 to the shipping agents or forwarders using the computers 30 and 40 for inquiring the shipping rates of the selected shipping schedules. These e-mails can be only a notification and contains a link directed to web pages on the web server 1. These web pages contain the inquiry information of the corresponding shipping schedules. When the shipping agents or forwarders click the link and access these web pages, the inquiry information will be displayed on their own monitors. Another example is that these-emails directly include the inquiry information of the shipping schedules. The former is adopted in this embodiment.

According to the inquiry form 210 and its related information, the shipping agent or forwarders using the shipping agent computers 30 individually determine the shipping rates of the selected shipping schedules and sends the rate data 220 to the web server 1 via the network. After receiving the rate data 220, the web server 1 sends two reply inquiry e-mails 106 to the customer. As described above, the two reply .inquiry e-mails 106 can contain a link directed to a web page having the information of the shipping rates determined by the two shipping agents or forwarders, or directly include the information of the shipping rates. In this embodiment, the former is adopted for this step and the following similar steps. Then the rate data are displayed on the monitor 11 of the customer computer 10.

### Booking Procedure

If the customer accepts the shipping rate provided by the shipping agent using the shipping agent computer 30 and is ready to book it, the customer fills in a booking form 108 for ordering the selected shipping schedule provided by the shipping agent using the computer 30 and sends it to the web server 1. Then the web server 1 mails a booking e-mail 230 to the shipping agent using the computer 30 providing the selected carrier schedule of the booking of the selected carrier schedule, for example, by e-mail. The booking e-mail 230 can contain a link directed to a web page containing the booking information of the selected shipping schedule on the web server 1 or directly include the booking information of the selected shipping schedule. Then the booking form 108 is displayed on the monitor 31 of the shipping agent computer 30.

After receiving the booking message, the shipping agent can assign a serial number to the current booking form and calculates a total fee of the shipping schedule ordered by the customer and sends them to the web server 1. In this embodiment, the serial number and the total fee are called a transaction record 240. Then the web server 1 mails a reply booking e-mail 110 to the customer. Similarly, the reply e-mail 110 can contain a link directed to a web page including the information of the serial number and the total fee that the shipping agent provides on the server, or directly include the information of the serial number and the total fee that the carrier agent provides. Then the serial number and the total fee are displayed on the monitor 11 of the customer computer 10. The inquiry and booking procedures are successfully performed.

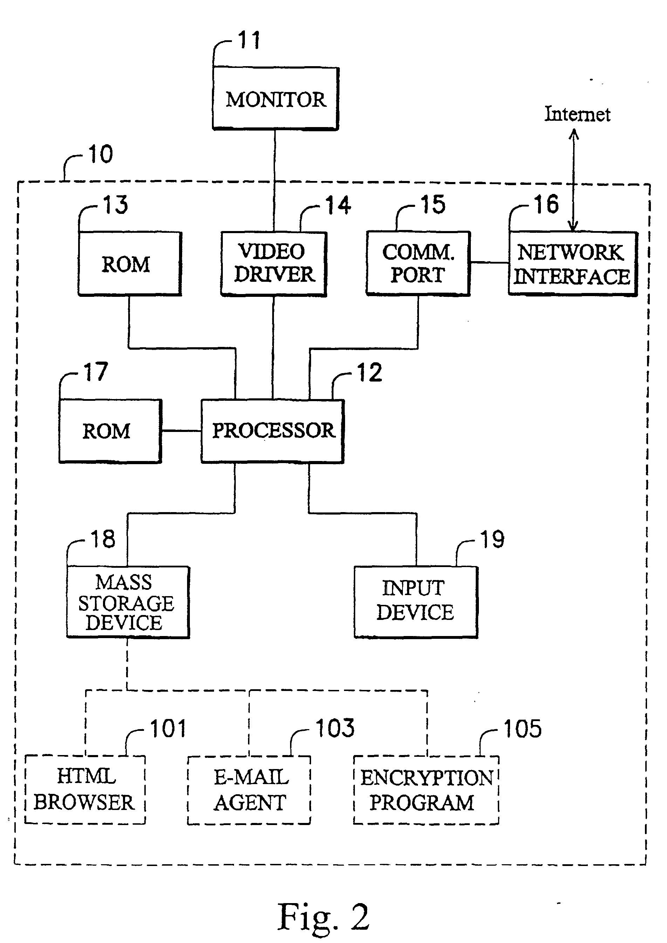

FIG. 2 is a block diagram of the customer computer 10 in this preferred embodiment. As shown in FIG. 2, the customer computer 10 includes a processor or central processing unit (CPU) 12, read-only memories (ROM) 13, a video driver 14, a communication port 15, a network interface circuit 16, random access memories (RAM) 17, a mass storage device 18 and an input device 19. The processor 12 is a processing center and used for executing programs and managing data. ROM 13 and RAM 17 are system memory devices for storing fixed and temporary data, respectively. The ROM 13 is used to store the necessary subroutines and data for system booting and low-level operations. The RAM 17 is used to store temporary data and executable software programs. The video driver 14 is connected to and drives monitor 11 for displaying information. The communication port 15 is connected to the network interface circuit 16 for accessing the Internet. The mass storage device 18, such as hard disk drives, is used for storing data and codes. The input device 19, such as keyboards, mouse, image sensors or other devices, is used to accept the user's input. In addition, FIG. 2 also illustrates three applications stored in the mass storage device 18, including an HTML browser 101, an e-mail agent 103 and an encryption program 105. The HTML browser 101 is used to view HTML web pages, such as the shipping-line data 102 and the other web pages in this embodiment. The e-mail agent 103 is used to send and receive e-mails, such as the reply inquiry e-mail 106 and the reply booking e-mail 110. The encryption program 105 is used to encrypt and decrypt private or confidential data, such as the login data 100 and the shipping rates 106. These applications are loaded into the RAM 17 and executed in the processor 12.

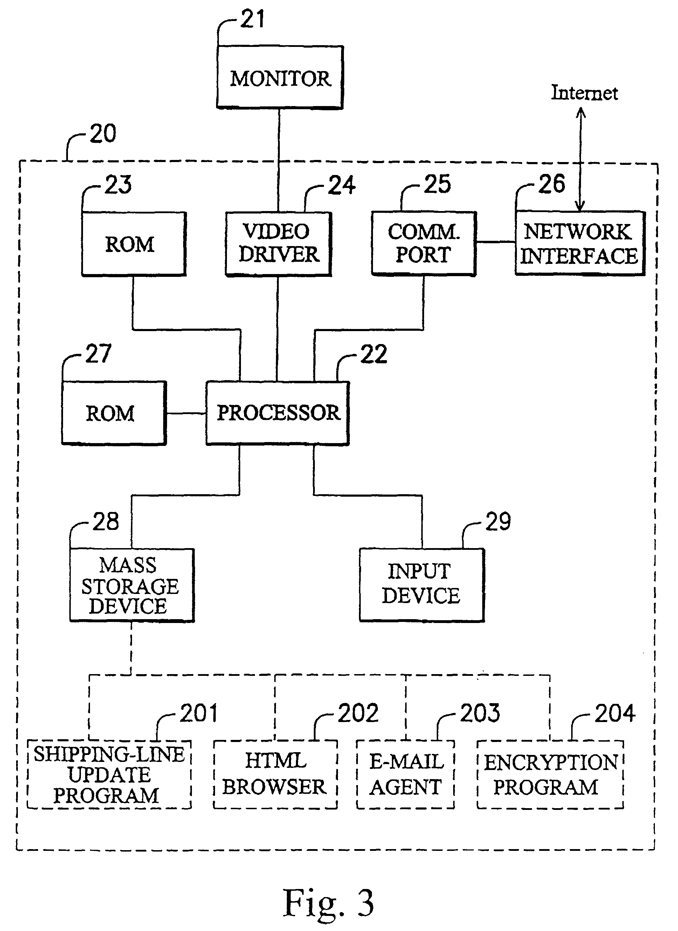

FIG. 3 is a block diagram of the shipping agent computer 20 in this preferred embodiment. The shipping agent computer 20 is similar to the customer computer 10 and the same as the shipping agent computers 30 and 40. As shown in FIG. 3, it includes a processor 22, ROM 23, a video driver 24, a communication port 25, a network interface circuit 26, RAM 27, a mass storage device 28 and an input device 29. Different to the customer computer 10, the shipping agent computer 20 includes four applications stored in the mass storage device 28, including a shipping-line update program 201, an HTML browser 202, an e-mail agent 203 and an encryption program 204. The shipping-line update program 201 is used to update the shipping lines provided by the shipping agents. The HTML browser 202 is used to view HTML web pages applied in this embodiment. The e-mail agent 203 is used to send and receive e-mails, such as the inquiry e-mail 210 and the booking e-mail 230. The encryption program 204 is used to encrypt and decrypt private or confidential data. These applications are loaded into the RAM 27 and executed in the processor 22.

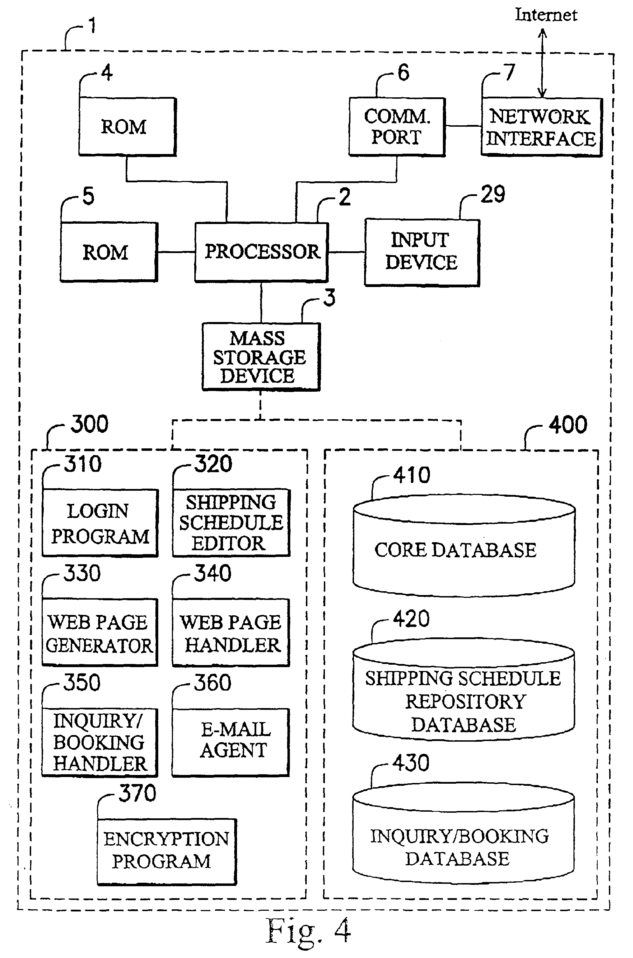

FIG. 4 is a block diagram of the web server 1 in this preferred embodiment. The web server 1 is also similar to other terminals. As shown in FIG. 4, it includes a processor 2, a mass storage device 3, ROM 4, RAM 5, a communication port 6, a network interface circuit 7 and an input device 8. In addition, the web server 20 includes an application portion 300 and a database portion 400 stored in the mass storage device 3. The applications portion 300 includes a login program 310, a shipping schedule editor 320, a web page generator 330, a web page handler 340, an inquiry/booking handler 350, an e-mail agent 360 and an encryption program 370. The database portion 400 includes a core database 410, a shipping schedule repository database 420 and an inquiry/booking database 430.

In the database portion 400, the core database 410 is used to store the authorization data for the customers and the shipping agents, including the user name or the e-mail address or the password, for the login process. The core database 410 also can contain other reference data of the registered customers and shipping agents. The shipping schedule repository database 420 is used to store the shipping-line data 200 and their corresponding shipping schedule data. The inquiry/booking database 430 is used to store all records during the inquiry and booking procedures, such as the inquiry forms, the determined shipping rates, the booking forms, the booking information of the serial numbers and the total fees, and so on.

In the application portion 300, the login program 310 is used to process the login process of the customers or the shipping agents. The login program 310 can access the core database 410 for authorization. The shipping schedule editor 320 is used to update the shipping schedule repository database 420 according to the shipping-line data 200. The web page generator 330 is used to generate the web pages required in the inquiry and booking procedures, such as the web pages containing the shipping schedule data or the inquiry and booking information that can be accessed by the customers and the shipping agents. The inquiry/booking handler 350 can control the process of the inquiry and booking procedures described above and saves the inquiry and booking information in the inquiry/booking database 430. The e-mail agent 360 is used to send and receive e-mails. The encryption program 370 is used to encrypt and decrypt private or confidential data. These applications are loaded into the RAM 5 and executed in the processor 2.

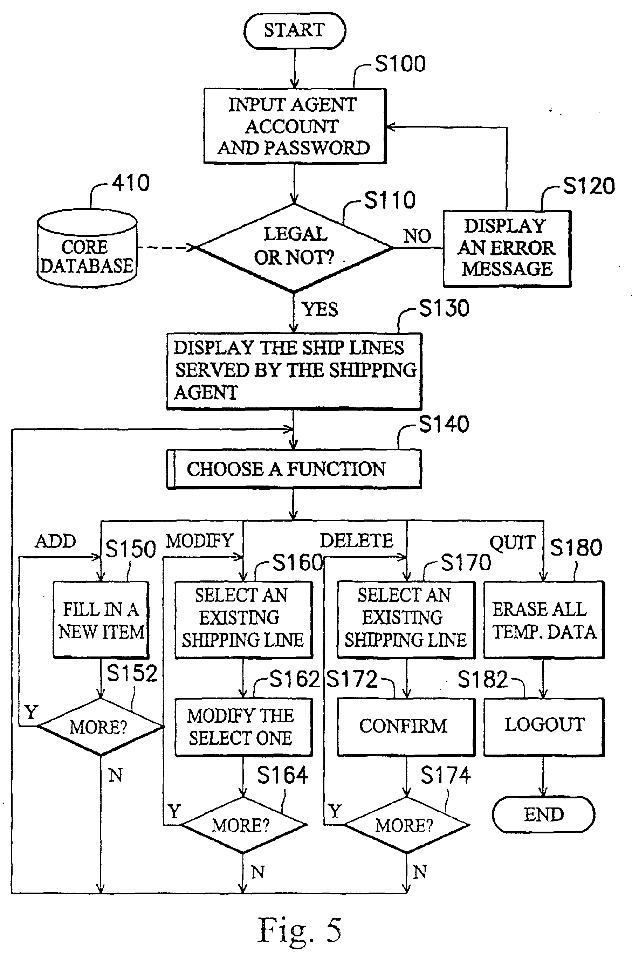

FIG. 5 is a flowchart of the login process for a shipping agent or forwarder performed by the login program 310 in the preferred embodiment. When a user accesses the web server 1, the web server 1 shows an authorization checker to verify the visitor. Then the user inputs an agent account (user name or e-mail address) and a password for authorization (S100). Then the web server 1 checks if the input is valid or not (S110) using the core database 410. If the input is invalid, the web server 1 displays an error message (S120) and returns to step S100. If the input is valid, the web server 1 displays the ship lines served by the visiting shipping agent or forwarder (S130). At this time, the visiting shipping agent or forwarder can choose one from the following functions (S140): "ADD", "MODIFY", "DELETE" an "QUIT". If the visiting shipping agent or forwarder chooses the function "ADD", the visiting shipping agent requires entering a new shipping line (S150). The adding operation can be repeated (S152). If the visiting shipping agent or forwarder chooses the function "MODIFY", the visiting shipping agent or forwarder requires selecting an existing ship line (S160) and modifies it (S162). The modification operation can be repeated (S164). If the visiting shipping agent or forwarder chooses the function "DELETE", the visiting shipping agent or forwarder requires selecting an existing ship line (S170) and confirms the deletion operation (2172). The deleting operation can be repeated (S174). If the visiting shipping agent or forwarder chooses the function "Quit", the web server 1 erase all temporary data (S180) and the visitor logouts the system (S182). It is understood by those skilled in the art that the login process for the customers can be designed in the similar manner.

Referring to FIG. 1, the inquiry and booking procedures for the customer side and the shipping agent or forwarder side are described as follows.

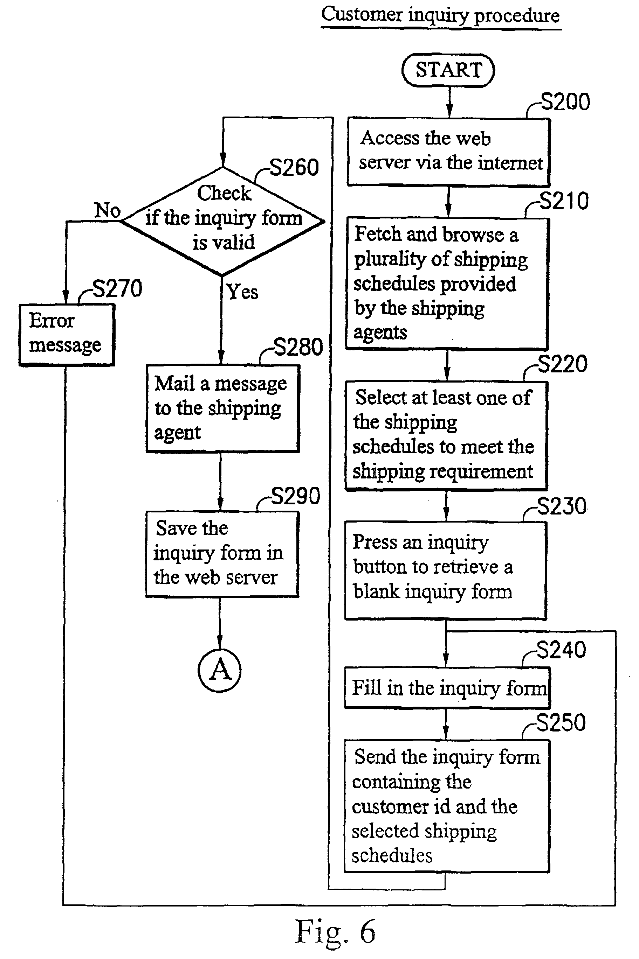

FIG. 6 is a flowchart of the customer inquiry procedure in this preferred embodiment. The customer accesses the web server 1 via the Internet (S200), and fetches and browses a plurality of shipping schedules provided by the shipping agents (S210). The customer can select at least one of the shipping schedules to meet the shipping requirement (S220). According to the selection result, the customer can press an inquiry button on the web page to retrieve a blank inquiry form (S230) and fill in the inquiry form (S240). Then the customer sends the inquiry form containing the customer ID and the selected shipping schedules to the web server 1 (S250). The web server 1 checks if the inquiry form is valid or not (S260). If it is invalid, the web server 1 shows an error message (S270) and the customer must fill in the inquiry form again. If it is valid, the web server 1 can mail a message that contains a link directed to the web page to the shipping agent (S280) and save the inquiry form in the database of the web server 1 (S290).

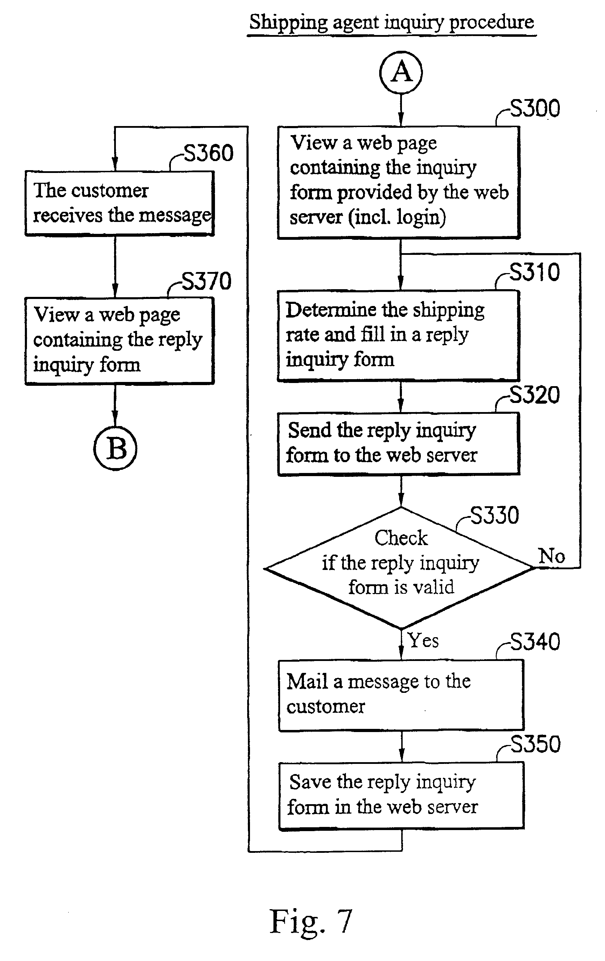

FIG. 7 is a flowchart of the shipping agent inquiry procedure in this preferred embodiment. The shipping agent can view a web page containing the inquiry form provided by the web server (S300). Therefore, the shipping agent can determine the shipping rate, fill in a reply inquiry form (S310) and send it to the web server 1 (S320). The web server 1 can check if the reply inquiry form is valid or not (S330). If it is invalid, the shipping agent must fill in the reply inquiry form again. If it is valid, the web server 1 can mail a message that contains a link directed to the web page to the customer (S340) and save the reply inquiry form in the database of the web server 1 (S350). Then the customer receives the message (S360) and views a web page containing the reply inquiry form (S370).

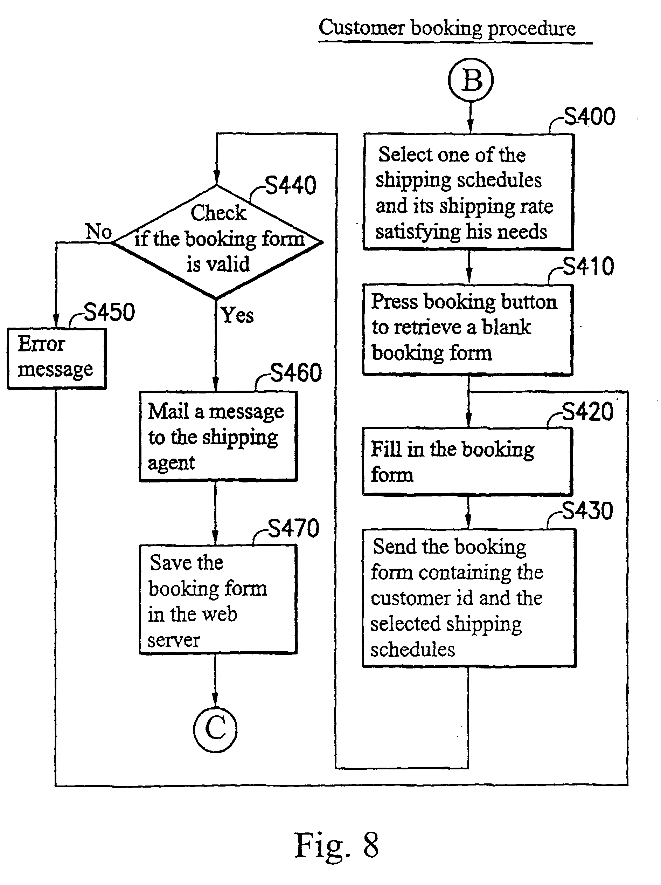

FIG. 8 is a flowchart of the customer booking procedure in this preferred embodiment. After viewing the web, the customer can select one of the shipping schedules and its shipping rate satisfying his need (S400). According to the selection result, the customer can press a booking button on the web page to retrieve a blank booking form (S410) and fill in the booking form (S420). Then the customer sends the booking form containing the customer ID and the selected shipping schedules to the web server 1 (S430). The web server 1 checks if the booking form is valid or not (S440). If it is invalid, the web server 1 shows an error message (S450) and the customer must fill in the booking form again. If it is valid, the web server 1 can mail a message that contains a link directed to the web page to the shipping agent (S460) and save the booking form in the database of the web server 1 (S470).

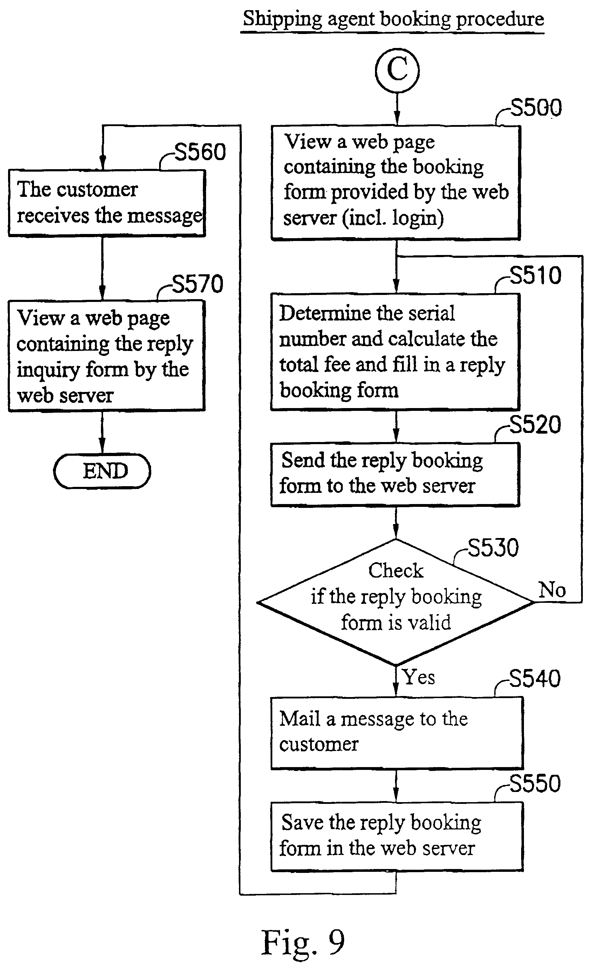

FIG. 9 is a flowchart of the shipping booking procedure in this preferred embodiment. The shipping agent can view a web page containing the booking form provided by the web server (S500). Therefore, the shipping agent can determine the serial number, calculate the total fee, fill in a reply booking form (S510) and send them to the web server 1 (S520). The web server 1 can check if the reply booking form is valid or not (S530). If it is invalid, the shipping agent must fill in the reply booking form again. If it is valid, the web server 1 can mail a message that contains a link directed to the web page to the customer (S540) and save the reply booking form in the database of the web server 1 (S550). Then the customer receives the message (S560) and views a web page containing the reply inquiry form (S570). The inquiry and booking procedures are successfully performed- It is noted that the same inquiry and booking also can be applied to other carriage applications, such airlines.

While the invention has been described by way of example and in terms of the preferred embodiment, it is to be understood that the invention is not limited to the disclosed embodiments. On the contrary, it is intended to cover various modifications and similar arrangements as would be apparent to those skilled in the art. Therefore, the scope of the appended claims should be accorded the broadest interpretation so as to encompass all such modifications and similar arrangements.

In particular, the invention is not limited solely to processing carriage requirements, though this is the prime application, but can be applied to any networkbased order-matching method and system.

## Claims

1. A method for processing a carriage requirement of a customer, comprising the steps of:
displaying carrier schedules provided by a plurality of carrier agents on a computer (10) of the customer, each of the carrier schedules containing a departure location, a destination location and a schedule data and being provided by one of the carrier agents;
selecting at least one of the carrier schedules to meet the carriage requirement by the customer;
sending an inquiry form containing the selection result for inquiring the carrier rate from the computer of the customer to a server (1) via a network;
informing the carrier agent providing the carrier schedule selected by the customer of the inquiry of the carriage rate;
displaying the inquiry form on the computer (20, 30...) of the carrier agent;
determining a carriage rate of the selected carrier schedule by the carrier agent according to the inquiry form;
sending the carriage rate from the computer of the carrier agent to the server via the network;
informing the customer of the reception of the carriage rate; and
displaying the determined carriage rate on the computer of the customer.

2. A method as recited in claim 1, further comprising the steps of:
filling in a booking form for ordering the selected carrier schedule provided by the carrier agent if the determined carriage rate conforms to the carriage requirement of the customer;
informing the carrier agent providing the carrier schedule selected by the customer of the booking of the selected carrier schedule;
displaying the booking form on the computer of the carrier agent;
assigning, by the carrier agent, a serial number to the booking form and calculating, by the carrier agent, the total fee of the carrier schedule ordered by the customer;
informing the customer of the reception of the serial number and the total fee; and
displaying the serial number and the total fee on the computer of the customer.

3. A method as recited in claim 1 or 2, wherein the customer selects at least two of the carrier schedules provided by two or more carrier agents to combine a shipping journey meeting the carriage requirement; and the server informs the carrier agents of the inquiry of the carrier schedules and receives the carriage rates of the selected carrier schedules from the carrier agents, respectively.

4. A method as recited in claim 1 or 2, wherein the customer selects at least two of the carrier schedules provided by two or more carrier agents, which have the same departure location and destination location; and the server informs the carrier agents of the inquiry of the carrier schedules and receives the carriage rates of the selected carrier schedules from the carrier agents, respectively.

5. A method as recited in any preceding claim, further comprising a step of storing the inquiry form pertaining to the customer and the carriage rate pertaining to the or each carrier agent in a database of the server.

6. A method as recited in claim 2 and 5, further comprising a step of storing the serial number and the total fee pertaining to the carrier agent in the database of the server.

7. A method as recited in any preceding claim, wherein in the step of informing the carrier agent of the inquiry of the carriage rate, and/or the step of informing the customer of the reception of the carriage rate, and/or the step of informing the carrier agent of the booking of the selected carrier schedule, and/or (if applicable) the step of informing the customer of the reception of the serial number and the total fee, is achieved by sending an electronic mail.

8. A method as recited in claim 7, wherein the electronic mail contains a link directed to a first web page on the server, and the first web page includes the information of the carrier schedule that the customer requests; or the electronic mail contains a link directed to a second web page on the server, and the second web page includes the information of the carriage rate that the carrier agent determines; or the electronic mail contains a link directed to a third web page on the server, and the third web page includes the information of the booking of the selected carrier schedule; or (if applicable) the electronic mail contains a link directed to a fourth web page on the server, and the fourth web page includes the information of the serial number and the total fee that the carrier agent provides; or any combination of the preceding.

9. A method as recited in claim 7, wherein the electronic mail contains the information of the carrier schedule that the customer requests, and/or the information of the carrier rate that the carrier agent determines; and/or the information of the booking of the selected carrier schedule; and/or (if applicable) the information of the serial number and the total fee that the carrier agent provides.

10. A system for processing a carriage requirement of a customer, comprising:
means for transferring a plurality of carrier schedules provided by a plurality of carrier agents to a computer (10) of the customer, each of the carrier schedules containing a departure location, a destination location and schedule data and being served by one of the carrier agents;
means for receiving an inquiry form containing at least one of the carrier schedules selected by the customer from the computer of the customer and a carriage rate of the selected carrier schedule determined by the carrier agent serving the selected carrier schedule from a computer (20, 30...) of the carrier agent; and
means for informing the carrier agent providing the selected carrier schedule of the inquiry of the carrier schedule and informing the customer of the reception of the carriage rate.

11. A system as recited in claim.10, wherein the informing means is an electronic mail agent program and is adapted to mail a first electronic mail with a first link directed to a first web page on the server (1) to the carrier agent and a second electronic mail with a second link directed to a second web page on the server to the customer.

12. A system as recited in claim 11, further comprising:
means for generating the first web page containing the information of the selected carrier schedule and the second web page containing the information of the carrier rate; and
means for processing the access of the first web page and the second web page.

13. A system as recited in claim 10, wherein the informing means is an electronic mail agent program and is adapted to mail a first electronic mail containing the information of the selected carrier schedule to the carrier agent and a second electronic mail containing the information of the carrier rate to the customer.

14. A system as recited in any of claims 10 to 13, wherein
the receiving means is set up to receive a booking form from the computer (10) of the customer for ordering the selected carrier schedule, and a serial number and a total fee from the computer of the carrier agent; and
the informing means is set up to inform the carrier agent providing the selected carrier schedule of the booking of the carrier schedule and to inform the customer of the reception of the serial number and the total fee.

15. A system as recited in claim 14, wherein the informing means is an electronic mail agent program and is adapted to mail a third electronic mail with a third link directed to a third web page on the server to the carrier agent and a fourth electronic mail with a fourth link directed to a fourth web page on the server (1) to the customer.

16. A system as recited in claim 15, further comprising:
means for generating the third web page containing the information of the booking of the selected carrier schedule and the fourth web page containing the information of the serial number and the total fee provided by the carrier agent; and
means for processing the access of the third web page and the fourth web page.

17. A system as recited in claim 14, wherein the informing means is an electronic mail agent program and is adapted to mail a third electronic mail containing the information of the booking of the selected carrier schedule and a fourth electronic mail containing the information of the serial number and the total fee provided by the carrier agent.

18. A system as recited in any of claims 10-17, further comprising a storage medium (430) for storing the inquiry form pertaining to the customer and the carriage rate pertaining to the carrier agent, and if appropriate also the serial number and the total fee pertaining to the carrier agent.

19. A method for processing an order requirement of a customer, comprising the steps of:
displaying schedules provided by a plurality of suppliers on a computer (10) of the customer, each of the schedules containing product information and being provided by one of the suppliers;
selecting at least one of the schedules to meet the requirement by the customer;
sending an inquiry form containing the selection result for inquiring the product rate from the computer of the customer to a server (1) via a network;
informing the supplier providing the schedule selected by the customer of the inquiry of the rate;
displaying the inquiry form on the computer (20, 30...) of the supplier;
determining a product rate of the selected schedule by the supplier according to the inquiry form;
sending the rate from the computer of the supplier to the server via the network;
informing the customer of the reception of the rate; and
displaying the determined rate on the computer of the customer.
